# EUROPEAN PATENT APPLICATION

(11) **EP 4 742 330 A1**
(43) Date of publication of application: **13.05.2026**
(21) Application number: 24854490.0
(22) Date of filing: 16.08.2024
(51) Int. Cl.: H01M 4/70, H01M 50/533, H01M 50/54, H01M 50/534, H01M 4/66, H01M 10/04, H01M 50/536

(54) **ELECTRODE CURRENT COLLECTOR, ELECTRODE ASSEMBLY COMPRISING ELECTRODE CURRENT COLLECTOR, AND METHOD FOR MANUFACTURING ELECTRODE CURRENT COLLECTOR**

(30) Priority: 17.08.2023 KR 20230107719; 17.08.2023 KR 20230107801; 17.08.2023 KR 20230107879; 13.08.2024 KR 20240108652
(71) Applicant: LG Energy Solution, Ltd., Seoul 07335 (KR)
(72) Inventor: KANG, Gyung Soo, Daejeon 34122 (KR); MAENG, Han Sol, Daejeon 34122 (KR)
(74) Representative: Hoffmann Eitle
(86) International application number: PCT/KR2024/012238
(87) International publication number: WO 2025/037939

(57) **Abstract**

The present disclosure relates to an electrode current collector, an electrode assembly including the electrode current collector, and a method for manufacturing the electrode current collector, and an electrode current collector according to the present disclosure is an electrode current collector including an electrode tab extending at an end, and includes a polymer layer and a first metal layer and a second metal layer laminated on both surfaces of the polymer layer, wherein in the electrode tab, a concave portion recessed toward the polymer layer is formed in at least one of the first metal layer or the second metal layer.

## Description

### TECHNICAL FIELD

### CROSS-REFERENCE TO RELATED APPLICATIONS

The present application claims priority to Korean Patent Application No. 10-2023-0107879 filed on August 17, 2023, Korean Patent Application No. 10-2023-0107801 filed on August 17, 2023, Korean Patent Application No. 10-2023-0107719 filed on August 17, 2023, and Korean Patent Application No. 10-2024-0108652 filed on August 13, 2024 in the Republic of Korea, the disclosures of which are incorporated herein by reference.

### TECHNICAL FIELD

The present disclosure relates to an electrode current collector, an electrode assembly including the electrode current collector, and a method for manufacturing the electrode current collector.

### BACKGROUND ART

Secondary batteries are rechargeable unlike primary batteries, and have been heavily researched and developed in recent years due to their potential for miniaturization and large capacity. As the technology development and demand for electric vehicles, energy storage systems (ESSs), mobile devices, and the like increase, the demand for secondary batteries as an energy source is rapidly increasing. However, the safety of secondary batteries is not keeping up with the pace of technological advancement. To solve this problem, there is a method for improving safety by creating an electrical short before the abnormal behavior of secondary batteries to drain energy or by short-circuiting the electrical connection.

Secondary batteries are classified into coin type batteries, cylindrical batteries, prismatic batteries, and pouch type batteries depending on the shape of a battery case. In a secondary battery, the electrode assembly mounted inside the battery case is a power generating element that can be charged and discharged with a stacked structure of electrodes and separators.

The electrode assembly may be roughly classified into a jelly-roll type in which a sheet-like positive electrode and negative electrode where an active material is applied to a current collector having a separator interposed therebetween are wound, a stack type in which multiple positive electrodes and negative electrodes are sequentially stacked with a separator interposed therebetween, and a stack/folding type in which the stack-type unit cells are wound with a long separation film.

### SUMMARY

### TECHNICAL PROBLEM

The present disclosure is designed to providing an electrode current collector having improved weldability, an electrode assembly including the electrode current collector, and a method for manufacturing the electrode current collector.

### TECHNICAL SOLUTION

An electrode current collector according to an embodiment of the present disclosure is an electrode current collector including an electrode tab extending at an end, and may include a polymer layer and a first metal layer and a second metal layer laminated on both surfaces of the polymer layer, wherein in the electrode tab, a concave portion recessed toward the polymer layer may be formed in at least one of the first metal layer or the second metal layer.

Meanwhile, an electrode current collector according to an embodiment of the present disclosure is an electrode current collector including an electrode tab extending at an end, and may include a polymer layer and a first metal layer and a second metal layer laminated on both surfaces of the polymer layer, wherein some sections of the first metal layer and the second metal layer in the electrode tab may form a narrow section in which the mutual spacing is narrowed, and the mutual spacing between the first metal layer and the second metal layer in the narrow section may be 72% or less with respect to the thickness of the polymer layer other than the narrow section.

Additionally, an electrode assembly according to an embodiment of the present disclosure is an electrode assembly in which electrodes and separators are alternately stacked, wherein the electrode may include an electrode current collector including an electrode tab extending at an end, and the electrode current collector may include a polymer layer and a first metal layer and a second metal layer laminated on both surfaces of the polymer layer in the stacking direction, wherein in the electrode tab, a concave portion recessed toward the polymer layer may be formed in at least one of the first metal layer or the second metal layer.

In addition, a method for manufacturing the electrode current collector according to an embodiment of the present disclosure may include a lamination process for laminating a first metal layer and a second metal layer on both surfaces of a polymer layer to form a stack; a tab formation process for forming an electrode tab by notching an end portion of the stack; and a concave portion formation process for forming a concave portion recessed toward the polymer layer in at least one of the first metal layer and the second metal layer in the electrode tab.

### ADVANTAGEOUS EFFECTS

According to the present disclosure, in an electrode current collector in which metal layers are laminated on both surfaces of a polymer layer, concave portions recessed toward the polymer layer are formed in the metal layer located at the part forming the electrode tab, thereby having an effect of significantly improving weldability.

### BRIEF DESCRIPTION OF THE DRAWINGS

FIG. 1 is a perspective view showing an electrode current collector according to Embodiment 1 of the present disclosure.
FIG. 2 is a cross-sectional view showing an electrode tab in an electrode current collector according to Embodiment 1 of the present disclosure.
FIG. 3 is a perspective view showing an electrode current collector according to Embodiment 2 of the present disclosure.
FIG. 4 is a cross-sectional view showing an electrode tab in an electrode current collector according to Embodiment 2 of the present disclosure.
FIG. 5 is a cross-sectional view showing an electrode assembly according to an embodiment of the present disclosure.
FIG. 6 is a side view showing an electrode assembly according to an embodiment of the present disclosure.
FIG. 7 is a perspective view showing an electrode tab of an electrode current collector in an electrode assembly according to an embodiment of the present disclosure.
FIG. 8 is a cross-sectional view showing a secondary battery including an electrode current collector according to an embodiment of the present disclosure.
FIG. 9 is a perspective view showing a lamination process in a method for manufacturing an electrode current collector according to an embodiment of the present disclosure.
FIG. 10 is a perspective view showing a tab formation process in a method for manufacturing an electrode current collector according to an embodiment of the present disclosure.
FIG. 11 is a perspective view showing a concave portion formation process in a method for manufacturing an electrode current collector according to Embodiment 1 of the present disclosure.
FIG. 12 is a cross-sectional view showing a concave portion formation process in a method for manufacturing an electrode current collector according to Embodiment 1 of the present disclosure.
FIG. 13 is a cross-sectional view showing a concave portion formation process in a method for manufacturing an electrode current collector according to Embodiment 2 of the present disclosure.
FIG. 14 is a cross-sectional view showing an additional lamination process in a method for manufacturing an electrode current collector according to Embodiment 2 of the present disclosure.
FIG. 15 is a perspective view showing an electrode current collector according to Embodiment 2 of the present disclosure.
FIG. 16 is a perspective view showing an electrode current collector according to Embodiment 3 of the present disclosure.
FIG. 17 is a cross-sectional view showing an electrode tab in an electrode current collector according to Embodiment 3 of the present disclosure.
FIG. 18 is a perspective view showing an electrode current collector according to Embodiment 4 of the present disclosure.
FIG. 19 is a cross-sectional view showing an electrode current collector according to Embodiment 4 of the present disclosure.
FIG. 20 is a perspective view of an essential portion showing an example of an electrode current collector according to Embodiment 4 of the present disclosure.
FIG. 21 is a perspective view of an essential portion showing another example of an electrode current collector according to Embodiment 4 of the present disclosure.

### DETAILED DESCRIPTION

The objectives, specific advantages, and novel features of the present disclosure will become more apparent from the following detailed description and preferred embodiments in connection with the accompanying drawings. It should be noted that in affixing the reference numerals to the elements in each drawing in this specification, the identical reference numerals are affixed to the identical elements as much as possible even if they are shown in different drawings. Additionally, the present disclosure may be embodied in many different forms and is not limited to the embodiments described herein. And, in describing the present disclosure, detailed descriptions of related known technologies that may unnecessarily obscure the gist of the present disclosure will be omitted.

### Electrode current collector according to Embodiment 1

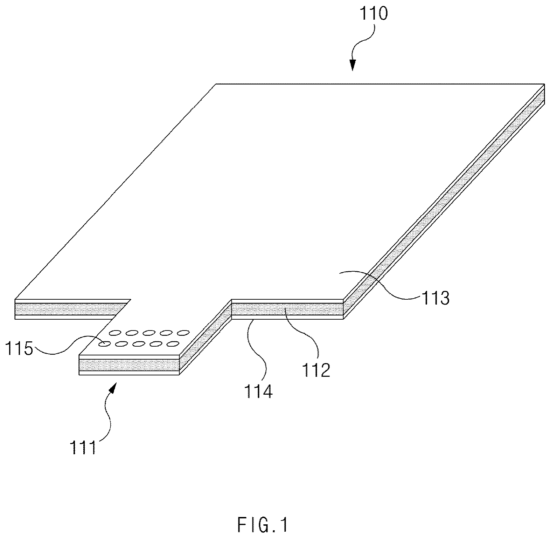

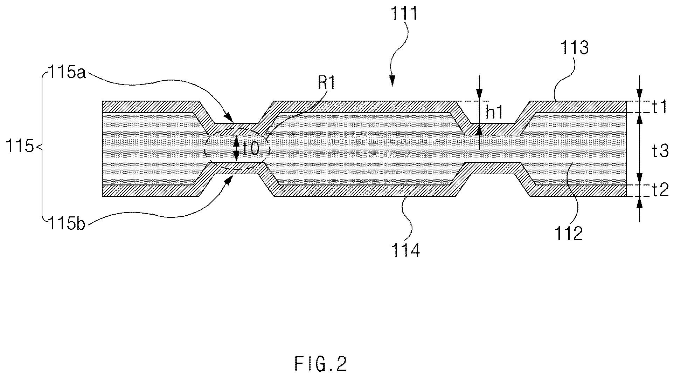

FIG. 1 is a perspective view showing an electrode current collector according to Embodiment 1 of the present disclosure, and FIG. 2 is a cross-sectional view showing an electrode tab in an electrode current collector according to Embodiment 1 of the present disclosure.

Referring to FIGS. 1 and 2, the electrode current collector 110 according to Embodiment 1 of the present disclosure is an electrode current collector 110 including an electrode tab 111 extending at an end, and includes a polymer layer 112 and a first metal layer 113 and a second metal layer 114 laminated on both surfaces of the polymer layer 112.

Additionally, some sections of the first metal layer 113 and the second metal layer 114 in the electrode tab 111 form a narrow section R1 in which the mutual spacing is narrowed, and the mutual spacing t0 between the first metal layer 113 and the second metal layer 114 in the narrow section R1 may be 72% or less with respect to the thickness of the polymer layer 112. Here, the narrow section refers to a section in which the mutual spacing between the first metal layer 113 and the second metal layer 114 is narrowed.

In addition, a concave portion 115 recessed toward the polymer layer 112 may be formed in at least one of the first metal layer 113 or the second metal layer 114 in the electrode tab 111.

More specifically, the electrode current collector 110 includes an electrode tab 111 extending at an end. That is, the electrode tab 111 may be formed by notching the end of the electrode current collector 110.

Additionally, the electrode current collector 110 includes a polymer layer 112 and a first metal layer 113 and a second metal layer 114 laminated on both surfaces of the polymer layer 112 in the stacking direction. Here, the polymer layer 112 is a layer including a polymer material, and the first metal layer 113 and the second metal layer 114 are layers including a metal material. Therefore, the electrode current collector 110 is provided in a form where the first metal layer 113 and the second metal layer 114 are laminated on both surfaces of the polymer layer 112, which may prevent the occurrence of a fire due to excessive current density occurring when formed of only a metal material. In addition, the electrode current collector 110 may form the first metal layer 113 and the second metal layer 114 thinly on both surfaces thereof, so that the risk of a shorting due to a metal burr or the like may be low in the event of breaking.

In addition, for example, the thickness t3 of the polymer layer 112 may be 4 to 20 um. In this case, specifically, for example, the thickness t3 of the polymer layer 112 may be 4 to 14 um.

And, for example, the thicknesses t1, t2 of the first metal layer 113 and the second metal layer 114 may be 0.2 to 3 um. Here, specifically, for example, the thicknesses t1, t2 of the first metal layer 113 and the second metal layer 114 may be 0.2 to 2 um.

Therefore, the thicknesses t1, t2 of the first metal layer 113 and the second metal layer 114 may be formed to be the lower limit value of 0.2 um or more, so that the electrical resistivity may be low. Accordingly, the function as an electrical connection, which is a required characteristic of the current collector foil, may be not limited. That is, the function as a battery may not be weakened.

Meanwhile, the thicknesses t1, t2 of the first metal layer 113 and the second metal layer 114 may be formed to be the upper limit value of 2 um or less, so that the energy density may be high. Additionally, the disadvantage of the conventional metal foil, which is the adverse effect on the safety enhancement through electrical insulation during the nail test, may be significantly reduced. Specifically, the electrode current collector 110 is provided in a form where the first metal layer 113 and the second metal layer 114 are laminated on both surfaces of the polymer layer 112, so that the first metal layer 113 and the second metal layer 114 may collapse due to the shrinkage of the polymer layer in the nail test, thereby enhancing safety through electrical insulation, but if the first metal layer 113 and the second metal layer 114 are too thick, the polymer layer 112 may not exert the safety enhancement function, thereby deteriorating safety. Therefore, the thicknesses t1, t2 of the first metal layer 113 and the second metal layer 114 are formed to be the upper limit value of 2 um or less, so that the polymer layer 112 including the polymer material may exert the safety enhancement function. Here, the nail test is to test safety by penetrating a nail.

Meanwhile, some sections of the first metal layer 113 and the second metal layer 114 in the electrode tab 111 form a narrow section R1 in which the mutual spacing is narrowed.

The mutual spacing t0 between the first metal layer 113 and the second metal layer 114 in the narrow section R1 may be, for example, 72% or less with respect to the thickness of the polymer layer 112. Accordingly, the mutual spacing t0 between the first metal layer 113 and the second metal layer 114 in the narrow section R1 may be formed to be, for example, 72% or less with respect to the thickness of the polymer layer 112, thereby improving weldability. Here, the mutual spacing t0 between the first metal layer 113 and the second metal layer 114 in the narrow section R1 may be specifically, for example, 50% or less with respect to the thickness of the polymer layer 112. In this case, the mutual spacing t0 between the first metal layer 113 and the second metal layer 114 in the narrow section R1 may be more specifically, for example, 10 to 50% with respect to the thickness of the polymer layer 112.

Additionally, for example, the mutual spacing t0 between the first metal layer 113 and the second metal layer 114 in the narrow section R1 may be 2 to 10 um. In this case, specifically, for example, the mutual spacing t0 between the first metal layer 113 and the second metal layer 114 in the narrow section R1 may be 2 to 8 um. Therefore, the mutual spacing t0 between the first metal layer 113 and the second metal layer 114 in the narrow section R1 may be formed to be the lower limit value of 2 um or more, thereby significantly improving thermal stability. On the other hand, the mutual spacing t0 between the first metal layer 113 and the second metal layer 114 in the narrow section R1 may be formed to be the upper limit value of 10 um or less, thereby facilitating welding.

And, a concave portion 115 recessed toward the polymer layer 112 is formed in at least one of the first metal layer 113 or the second metal layer 114 in the electrode tab 111. That is, in the narrow section R1, a concave portion 115 recessed toward the polymer layer 112 may be formed in at least one of the first metal layer 113 or the second metal layer 114 so that the mutual spacing t0 between the first metal layer 113 and the second metal layer 114 is narrowed. Accordingly, the thickness of the polymer layer 112 in the welded portion becomes thinner, and the spacing between the first metal layer 113 and the second metal layer 114 is reduced, thereby improving weldability.

The concave portion 115 may include a first concave portion 115a formed in the first metal layer 113 and a second concave portion 115b formed in the second metal layer 114.

The first concave portion 115a and the second concave portion 115b may be formed to face each other in the stacking direction.

Additionally, the first concave portion 115a and the second concave portion 115b may be provided at positions spaced apart from each other by a regular interval. Accordingly, the first metal layer 113 and the second metal layer 114 may be provided to be spaced apart from each other, thereby maintaining the safety effect of the metalized electrode current collector 110 in which metal layers are laminated on both surfaces of the polymer layer 112.

And, for example, the mutually facing spacing t0 between the first metal layer 113 portion where the first concave portion 115a is formed and the second metal layer 114 portion where the second concave portion 115b is formed may be 2 to 10 um. In this case, specifically, for example, the mutually facing spacing t0 between the first metal layer 113 portion where the first concave portion 115a is formed and the second metal layer 114 portion where the second concave portion 115b is formed may be 2 to 8 um.

Therefore, the mutually facing spacing t0 between the first metal layer 113 portion where the first concave portion 115a is formed and the second metal layer 114 portion where the second concave portion 115b is formed may be formed to be the lower limit value of 2 um or more, thereby significantly improving thermal stability. On the other hand, the mutually facing spacing t0 between the first metal layer 113 portion where the first concave portion 115a is formed and the second metal layer 114 portion where the second concave portion 115b is formed may be formed to be the upper limit value of 10 um or less, thereby significantly facilitating welding.

In addition, the first concave portion 115a and the second concave portion 115b may be formed in multiples in the first metal layer 113 and the second metal layer 114, respectively.

Meanwhile, the depth h1 in the stacking direction of the concave portion 115 may be formed to be, for example, 1 to 4 um. In this case, specifically, for example, the depth h1 in the stacking direction of the first concave portion 115a and the second concave portion 115b may be formed to be 1 to 4 um, respectively.

Referring to FIGS. 1 and 2, in the electrode current collector 110 according to Embodiment 1 of the present disclosure configured as described above, the first and second concave portions 115a, 115b recessed toward the polymer layer 112 may be formed in the first and second metal layers located at the part forming the electrode tab 111 in the metalized electrode current collector 110 in which metal layers are laminated on both surfaces of the polymer layer 112, thereby having the effect of significantly improving weldability. That is, when the electrode tabs 111 respectively provided on the multiple electrode current collectors 110 are mutually welded to form an electrode assembly, the first and second concave portions 115a, 115b recessed toward the polymer layer 112 are formed at the welded portion, so that the thickness of the polymer layer 112 located at the welded portion is formed thinly, and the interval between the first and second metal layers is narrowed, thereby having the effect of significantly improving welding. Ultimately, when welding using a laser or ultrasonic wave, it is possible to prevent weldability from deteriorating because the laser or ultrasonic wave may not pass through the polymer layer 112.

### Electrode current collector according to Embodiment 2

Hereinafter, an electrode current collector according to Embodiment 2 of the present disclosure will be described.

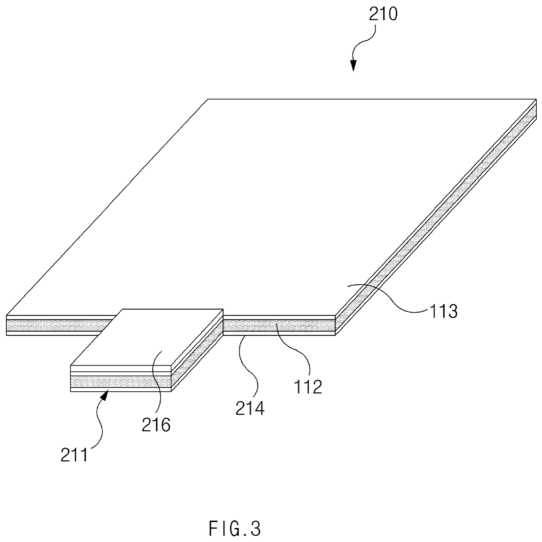

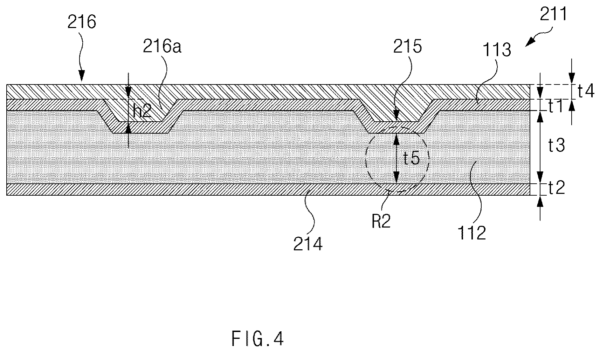

FIG. 3 is a perspective view showing an electrode current collector according to Embodiment 2 of the present disclosure, and FIG. 4 is a cross-sectional view showing an electrode tab in an electrode current collector according to Embodiment 2 of the present disclosure.

Referring to FIGS. 3 and 4, the electrode current collector 210 according to Embodiment 2 of the present disclosure is an electrode current collector 210 including an electrode tab 211 extending at an end, and includes a polymer layer 112 and a first metal layer 113 and a second metal layer 214 laminated on both surfaces of the polymer layer 112. Additionally, some sections of the first metal layer 113 and the second metal layer 214 in the electrode tab 111 form a narrow section R2 in which the mutual spacing is narrowed, and the mutual spacing t5 between the first metal layer 113 and the second metal layer 214 in the narrow section R2 may be 72% or less with respect to the thickness of the polymer layer 112.

In addition, a concave portion 215 recessed toward the polymer layer 112 is formed in at least one of the first metal layer 113 or the second metal layer 214 in the electrode tab 211. In this case, an additional metal layer 216 may be further laminated.

The electrode current collector according to Embodiment 2 of the present disclosure differs from the electrode current collector according to Embodiment 1 of the present disclosure described above in that an additional metal layer 216 is further provided on the outer surface of the metal layer. Therefore, this embodiment is to be described by omitting or briefly describing the content overlapping with the above-described embodiment and focusing on differences.

More specifically, the electrode current collector 210 includes an electrode tab 211 extending at an end. That is, the electrode tab 211 may be formed by notching the end of the electrode current collector 210.

Additionally, the electrode current collector 210 includes a polymer layer 112 and a first metal layer 113 and a second metal layer 214 laminated on both surfaces of the polymer layer 112 in the stacking direction. Here, the polymer layer 112 is a layer including a polymer material, and the first metal layer 113 and the second metal layer 214 are layers including a metal material.

In addition, for example, the thickness t3 of the polymer layer 112 may be 4 to 20 um. In this case, specifically, for example, the thickness t3 of the polymer layer 112 may be 4 to 14 um.

And, for example, the thicknesses t1, t2 of the first metal layer 113 and the second metal layer 214 may be 0.2 to 3 um. Here, specifically, for example, the thicknesses t1, t2 of the first metal layer 113 and the second metal layer 214 may be 0.2 to 2 um.

Meanwhile, some sections of the first metal layer 113 and the second metal layer 214 in the electrode tab 111 form a narrow section R2 in which the mutual spacing is narrowed. The mutual spacing t5 between the first metal layer 113 and the second metal layer 214 in the narrow section R1 may be, for example, 72% or less with respect to the thickness of the polymer layer 112. Here, the mutual spacing t5 between the first metal layer 113 and the second metal layer 214 in the narrow section R2 may be specifically, for example, 50% or less with respect to the thickness of the polymer layer 112. In this case, the mutual spacing t0 between the first metal layer 113 and the second metal layer 214 in the narrow section R1 may be more specifically, for example, 10 to 50% with respect to the thickness of the polymer layer 112.

Additionally, for example, the mutual spacing t5 between the first metal layer 113 and the second metal layer 214 in the narrow section R2 may be 2 to 10 um. In this case, specifically, for example, the mutual spacing t5 between the first metal layer 113 and the second metal layer 114 in the narrow section R1 may be 2 to 8 um.

And, a concave portion 215 recessed toward the polymer layer 112 is formed in at least one of the first metal layer 113 or the second metal layer 214 in the electrode tab 211. That is, in the narrow section R2, a concave portion 215 recessed toward the polymer layer 112 may be formed in at least one of the first metal layer 113 or the second metal layer 214 so that the mutual spacing t5 between the first metal layer 113 and the second metal layer 214 is narrowed.

In this case, the concave portion 215 may be formed in the first metal layer 113 in the electrode tab 211. Accordingly, the thickness of the polymer layer 112 in the welded portion becomes thinner, and the spacing between the first metal layer 113 and the second metal layer 214 is reduced, thereby improving weldability. And, the concave portion 215 and the second metal layer 214 may be provided at positions spaced apart from each other by a regular interval.

The mutually facing spacing t5 between the portion where the concave portion 215 is formed in the first metal layer 113 and the second metal layer 214 may be 2 to 10 um.

Therefore, the mutually facing spacing t5 between the portion where the concave portion 215 is formed in the first metal layer 113 and the second metal layer 214 may be formed to be the lower limit value of 2 um or more, so that the effect of preventing a fire from occurring due to excessive current density of the electrode current collector 110 in which the first metal layer 113 and the second metal layer 114 are laminated on both surfaces of the polymer layer 112 may be implemented. That is, the mutually facing spacing t5 between the portion where the concave portion 215 is formed in the first metal layer 113 and the second metal layer 214 may be formed to be the lower limit value of 2 um or more, thereby significantly improving thermal stability.

On the other hand, the mutually facing spacing t5 between the portion where the concave portion 215 is formed in the first metal layer 113 and the second metal layer 214 may be formed to be the upper limit value of 8 um or less, thereby significantly facilitating welding.

In addition, the concave portion 215 may be formed in multiples in the first metal layer 113.

Meanwhile, the depth in the stacking direction of the concave portion 215 may be formed to be 1 to 4 um.

The additional metal layer 216 may be laminated on the outer surface of the first metal layer 113. Here, the additional metal layer 216 may be positioned on the electrode tab 211.

In this case, the thickness t4 of the additional metal layer 216 may be formed to be 0.2 to 2 um.

Additionally, the additional metal layer 216 may further include a protrusion 216a that protrudes corresponding to the concave portion 215. In this case, for example, the height h2 of the protrusion 216a in the stacking direction may be formed to be 1 to 4 um.

Therefore, when welding the metalized electrode current collector, the weldability may be significantly improved by laminating the additional metal layer 216 on the outer surface of the first metal layer 113. That is, the weldability between the electrode tabs 211 and the weldability between the electrode tabs 211 and the electrode lead may be significantly improved.

Referring to FIGS. 3 and 4, in the electrode current collector 210 according to Embodiment 2 of the present disclosure configured as described above, the concave portion 215 recessed toward the polymer layer 112 may be formed in the first metal layer 113 located at the part forming the electrode tab 211 in the metalized electrode current collector 210 in which metal layers are laminated on both surfaces of the polymer layer 112, thereby having the effect of improving weldability. That is, when the electrode tabs 211 respectively provided on the multiple electrode current collectors 210 are mutually welded to form an electrode assembly and when the electrode tabs 211 and the electrode leads are welded, the concave portion 215 recessed toward the polymer layer 112 is formed at the welded portion, so that the thickness of the polymer layer 112 located at the welded portion is formed thinly, and the interval between the first and second metal layers is narrowed, thereby having the effect of significantly improving welding. Ultimately, when welding using a laser or ultrasonic wave, it is possible to prevent weldability from deteriorating because the laser or ultrasonic wave may not pass through the polymer layer 112. In particular, there is an effect of significantly improving weldability by further laminating an additional metal layer 216 on the outer surface of the first metal layer 113.

### Electrode assembly according to embodiment

Hereinafter, an electrode assembly according to an embodiment of the present disclosure will be described.

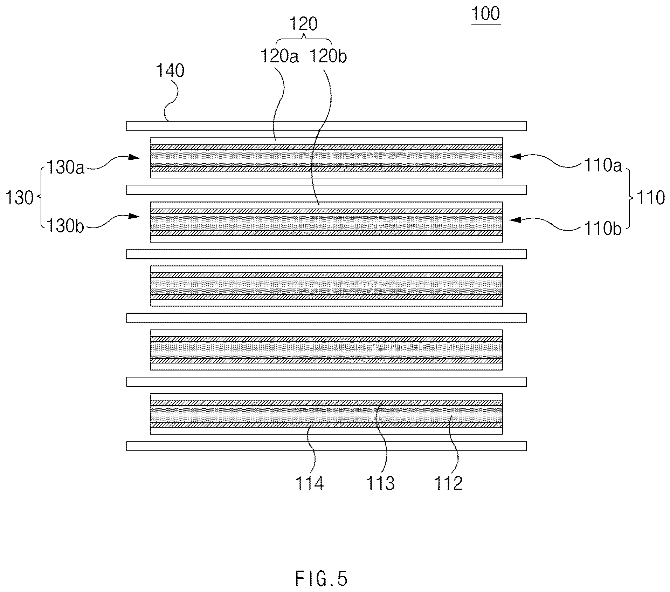

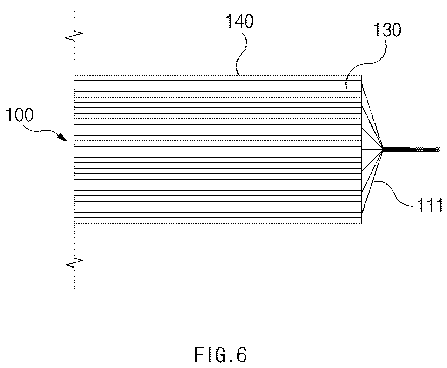

FIG. 5 is a cross-sectional view showing an electrode assembly according to an embodiment of the present disclosure, and FIG. 6 is a side view showing an electrode assembly according to an embodiment of the present disclosure.

Referring to FIGS. 1, 2, 5, and 6, the electrode assembly 100 according to an embodiment of the present disclosure is an electrode assembly 100 in which electrodes 130 and separators 140 are alternately stacked, wherein the electrode 130 includes an electrode current collector 110 including an electrode tab 111 extending at an end, and the electrode current collector 110 includes a polymer layer 112 and a first metal layer 113 and a second metal layer 114 laminated on both surfaces of the polymer layer 112 in the stacking direction, wherein a concave portion 115 recessed toward the polymer layer 112 is formed in at least one of the first metal layer 113 or the second metal layer 114 in the electrode tab 111.

The electrode assembly 100 according to an embodiment of the present disclosure relates to an electrode assembly 100 including an electrode current collector according to Embodiment 1 and an electrode current collector 110 according to Embodiment 2, which are described above. Therefore, this embodiment is to be described by omitting or briefly describing the content overlapping with the above-described embodiments and focusing on differences.

More specifically, the electrode assembly 100 according to an embodiment of the present disclosure is a power generating element that can be charged and discharged, and forms a structure in which electrodes 130 and separators 140 are combined and alternately stacked.

The electrode 130 includes an electrode current collector 110 including an electrode tab 111 extending at an end.

Here, the electrode 130 may include an electrode current collector 110 and an electrode active material 120 coated on one or both surfaces of the electrode current collector 110. In this case, the electrode 130 may be formed with a coated portion where the electrode active material 120 is coated on the electrode current collector 110 and an uncoated portion where the electrode active material 120 is not coated on the electrode current collector 110. In this case, an electrode tab 111 may be positioned in the uncoated portion of the electrode current collector 110.

The electrode current collector 110 may include a polymer layer 112 and a first metal layer 113 and a second metal layer 114 laminated on both surfaces of the polymer layer 112 in the stacking direction. In this case, a concave portion 115 recessed toward the polymer layer 112 is formed in at least one of the first metal layer 113 or the second metal layer 114 in the electrode tab 111.

Meanwhile, the polymer layer 112 may be formed of a material including, for example, polyethylene terephthalate (PET), polyimide (PI), or polyethylenenaphthalate (PEN).

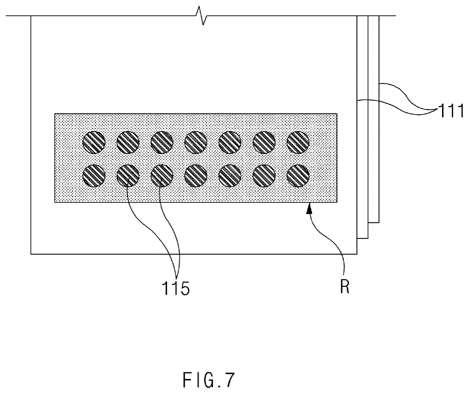

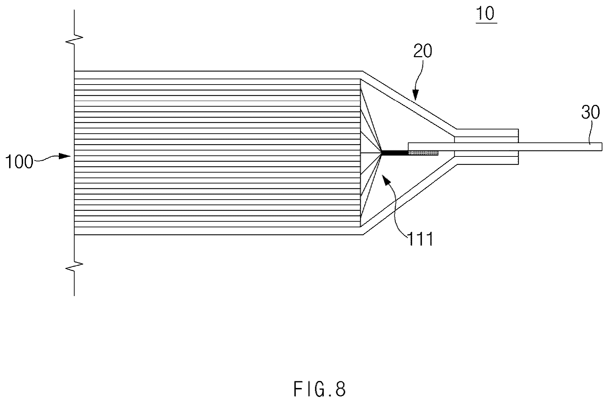

FIG. 7 is a perspective view showing an electrode tab of an electrode current collector in an electrode assembly according to an embodiment of the present disclosure, and FIG. 8 is a cross-sectional view showing a secondary battery including an electrode current collector according to an embodiment of the present disclosure.

Meanwhile, referring to FIGS. 5 to 8, in the electrode assembly 100, multiple electrodes 130 and separators 140 may be stacked. In this case, the electrode tabs 111 of the electrode current collectors 110 provided on each of multiple electrodes 130 are collected and welded together, and the concave portions 115 may be positioned at the welded portion R of the electrode tab 111. In this case, the electrode lead may be welded together at the welded portion R. Accordingly, when welding the metalized electrode current collector 110, the concave portions 115 may be positioned at the welded portion R of the electrode tab 111, thereby significantly improving weldability. That is, the weldability between the electrode tabs 111 and the weldability between the electrode tabs 111 and the electrode lead may be significantly improved.

Meanwhile, the electrode 130 may include a positive electrode 130a and a negative electrode 130b. And, the separator 140 separates the positive electrode 130a and the negative electrode 130b from each other to electrically insulate them.

The positive electrode 130a may include a positive electrode current collector 110a and a positive electrode active material 120a provided on one surface of the positive electrode current collector 110a. In this case, the positive electrode 130a may include a positive electrode uncoated portion, which is a region where the positive electrode active material 120a is not coated.

The positive electrode active material 120a may be made of lithium manganese oxide, lithium cobalt oxide, lithium nickel oxide, lithium iron phosphate, or a compound or mixture including one or more of these.

The negative electrode 130b may include a negative electrode current collector 110b and a negative electrode active material 120b provided on one surface of the negative electrode current collector 110b. In this case, the negative electrode 130b may include a negative electrode uncoated portion, which is a region where the negative electrode active material 120b is not coated.

The negative electrode active material 120b may be made of, for example, artificial graphite, lithium metal, lithium alloy, carbon, petroleum coke, activated carbon, graphite, silicon compound, tin compound, titanium compound, or an alloy thereof. In this case, the negative electrode active material 120b may further include, for example, non-graphite silica (SiO), silicon carbide (SiC), or the like.

Meanwhile, the positive electrode current collector 110a and the negative electrode current collector 110b may include a polymer layer 112 and a first metal layer 113 and a second metal layer 114 laminated on both surfaces of the polymer layer 112 in the stacking direction.

In this case, the first metal layer 113 and the second metal layer 114 located on the positive electrode current collector 110a may include an aluminum material, and the first metal layer 113 and the second metal layer 114 located on the negative electrode current collector 110b may include a copper material.

Meanwhile, referring to FIG. 2, as an example, the concave portion 115 may be formed in the first metal layer 113 and the second metal layer. That is, the concave portion 115 may include a first concave portion 115a formed in the first metal layer 113 and a second concave portion 115b formed in the second metal layer.

Referring to FIG. 4, as another example, the concave portion 215 may be formed in the first metal layer 113. In this case, an additional metal layer 216 may be further laminated on the outer surface of the first metal layer 113. Here, the additional metal layer 216 may be located on the electrode tab 211.

Meanwhile, referring to FIG. 8, a secondary battery 10 may be manufactured by including an electrode assembly 100 according to an embodiment of the present disclosure configured as described above. That is, the electrode assembly 100 may be accommodated in a pouch 20 to form a secondary battery 10. In this case, a secondary battery 10 may be formed by further including an electrode lead 30 that is connected to the electrode assembly 100 to electrically connect it to the outside of the pouch 20.

### Method for manufacturing electrode current collector according to Embodiment 1

Hereinafter, a method for manufacturing an electrode current collector according to Embodiment 1 of the present disclosure will be described.

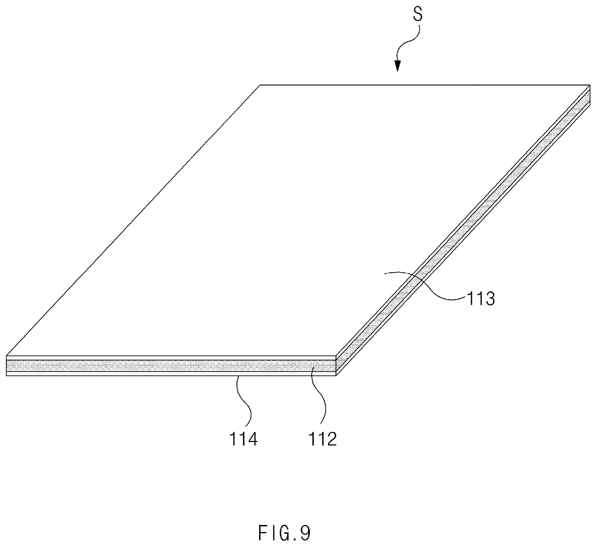

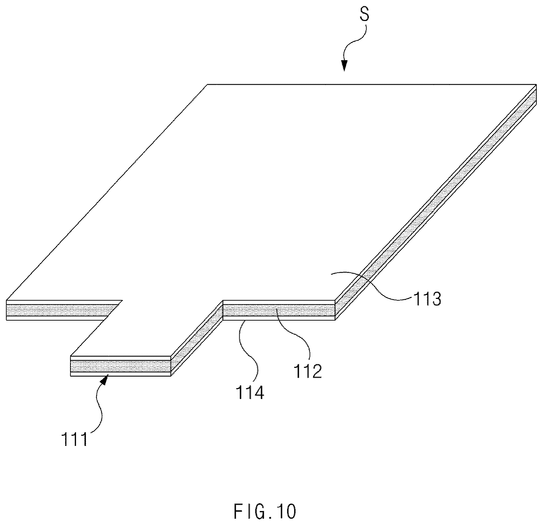

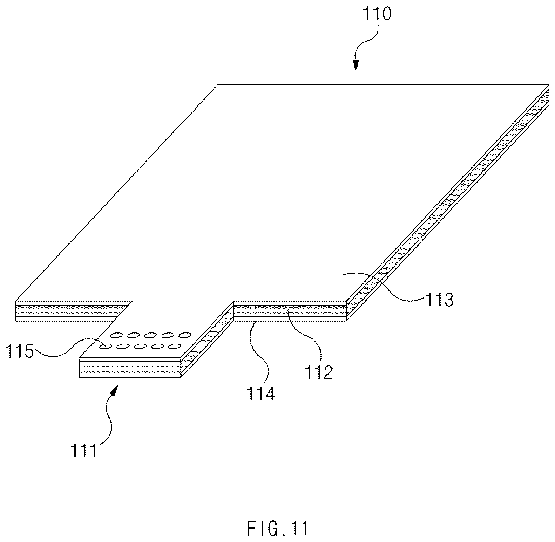

FIG. 9 is a perspective view showing a lamination process in a method for manufacturing an electrode current collector according to an embodiment of the present disclosure, FIG. 10 is a perspective view showing a tab formation process in a method for manufacturing an electrode current collector according to an embodiment of the present disclosure, and FIG. 11 is a perspective view showing a concave portion formation process in a method for manufacturing an electrode current collector according to Embodiment 1 of the present disclosure.

Referring to FIGS. 9 to 11, the method for manufacturing the electrode current collector according to Embodiment 1 of the present disclosure includes a lamination process for laminating a first metal layer 113 and a second metal layer 114 on both surfaces of a polymer layer 112 to form a stack S, a tab formation process for forming an electrode tab 111 by notching an end portion of the stack S, and a concave portion formation process for forming a concave portion 115 recessed toward the polymer layer 112 in at least one of the first metal layer 113 and the second metal layer 114 in the electrode tab 111. In this case, in the concave portion formation process, some sections of the first metal layer 113 and the second metal layer 114 in the electrode tab 111 may form a narrow section R1 in which the mutual spacing is narrowed.

The method for manufacturing an electrode current collector according to Embodiment 1 of the present disclosure relates to a method for manufacturing an electrode current collector according to Embodiment 1 of the present disclosure and an electrode current collector included in an electrode assembly according to an embodiment of the present disclosure, which are described above.

Therefore, the embodiment of the method for manufacturing an electrode current collector according to Embodiment 1 of the present disclosure is to be described by omitting or briefly describing the content overlapping with the embodiments of the present disclosure described above and focusing on differences.

More specifically, referring to FIG. 9, in the lamination process, the stack S is formed by laminating the first metal layer 113 and the second metal layer 114 on both surfaces of the polymer layer 112.

Additionally, in the lamination process, the first metal layer 113 and the second metal layer 114 may be laminated on both surfaces of the polymer layer 112 through deposition or lamination.

Referring to FIG. 10, in the tab formation process, an electrode tab 111 is formed by notching an end portion of the stack S.

That is, in the tab formation process, the electrode tab 111 may be formed in a protruding shape by cutting one side of the stack S in which the first metal layer 113 and the second metal layer 114 are laminated on both surfaces of the polymer layer 112.

Additionally, the tab formation process may include notching so that the electrode tab 111 is formed in the stack S using a punch die or laser.

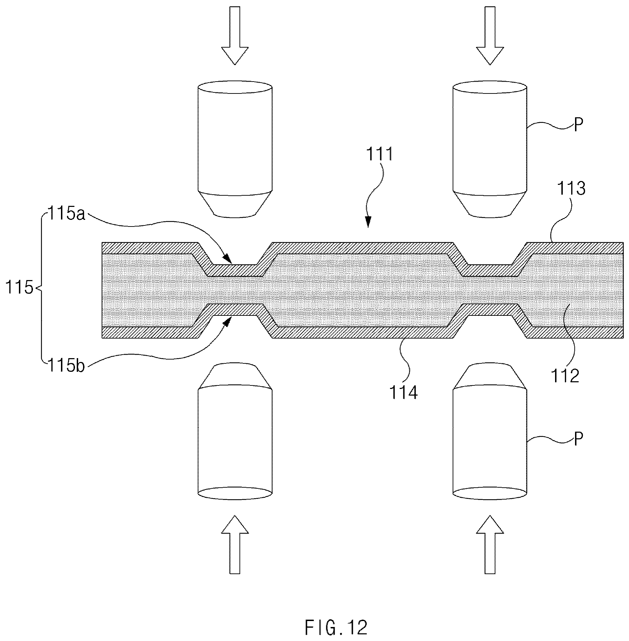

FIG. 12 is a cross-sectional view showing a concave portion formation process in a method for manufacturing an electrode current collector according to Embodiment 1 of the present disclosure.

Referring to FIGS. 2, 11, and 12, in the concave portion formation process, a concave portion 115 recessed toward the polymer layer 112 is formed in at least one of the first metal layer 113 or the second metal layer 114 in the electrode tab 111. Accordingly, in the concave portion formation process, some sections of the first metal layer 113 and the second metal layer 114 in the electrode tab 111 may form a narrow section R1 in which the mutual spacing is narrowed. In this case, the mutual spacing t0 between the first metal layer 113 and the second metal layer 114 in the narrow section R1 may be, for example, 72% or less with respect to the thickness of the polymer layer 112. And, for example, the mutual spacing t0 between the first metal layer 113 and the second metal layer 114 in the narrow section R1 may be 2 to 10 um. In this case, specifically, for example, the mutual spacing t0 between the first metal layer 113 and the second metal layer 114 in the narrow section R1 may be 2 to 8 um.

Additionally, the concave portion formation process may include a first pressing step of pressing a portion of the first metal layer 113 with a pressing means P to form a first concave portion 115a, and a second pressing step of pressing a portion of the second metal layer 114 with a pressing means P to form a second concave portion 115b. Here, the pressing means P may be, for example, a plunger. In this case, the concave portion formation process may form a concave portion 115 having a circular cross-section by using a plunger whose end is formed in a cylindrical shape.

And, the concave portion formation process may perform the first pressing step and the second pressing step together, and the first concave portion 115a and the second concave portion 115b may be formed to face each other at positions spaced apart from each other by a regular interval.

In addition, in the concave portion formation process, the first concave portions 115a and the second concave portions 115b may be formed in multiples in the first metal layer 113 and the second metal layer 114, respectively.

Here, in the concave portion formation process, for example, the depth h1 in the stacking direction of the concave portion 115 may be formed to be 1 to 4 um. In this case, specifically, for example, the depth h1 in the stacking direction of the first concave portion 115a and the second concave portion 115b may be formed to be 1 to 4 um, respectively.

### Method for manufacturing electrode current collector according to Embodiment 2

Hereinafter, a method for manufacturing an electrode current collector according to Embodiment 2 of the present disclosure will be described.

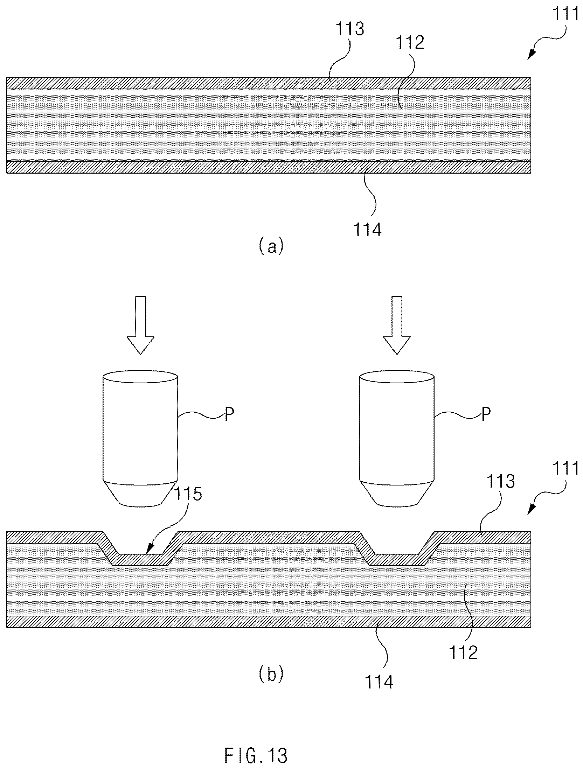

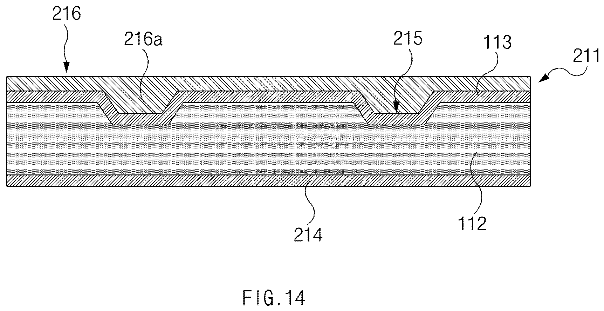

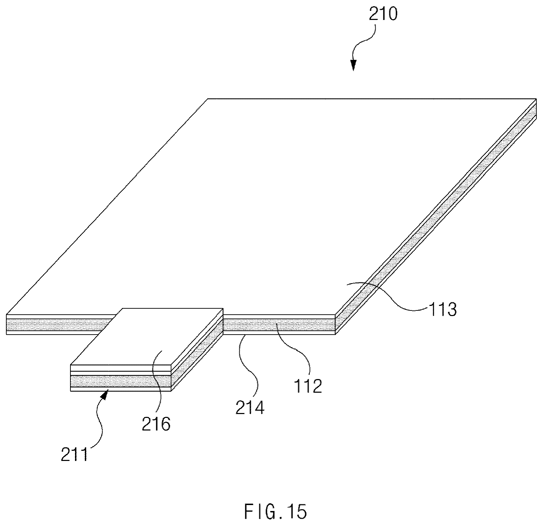

FIG. 13 is a cross-sectional view showing a concave portion formation process in a method for manufacturing an electrode current collector according to Embodiment 2 of the present disclosure, FIG. 14 is a cross-sectional view showing an additional lamination process in a method for manufacturing an electrode current collector according to Embodiment 2 of the present disclosure, and FIG. 15 is a perspective view showing an electrode current collector according to Embodiment 2 of the present disclosure. Here, FIG. 13 (a) shows a state before forming concave portions, and FIG. 13 (b) shows a state in which concave portions are formed.

Referring to FIGS. 9, 10, and FIGS. 13 to 15, the method for manufacturing the electrode current collector according to Embodiment 2 of the present disclosure includes a lamination process for laminating a first metal layer 113 and a second metal layer 214 on both surfaces of a polymer layer 112 to form a stack S, a tab formation process for forming an electrode tab 211 by notching an end portion of the stack S, and a concave portion formation process for forming a concave portion 215 recessed toward the polymer layer 112 in at least one of the first metal layer 113 and the second metal layer 214 in the electrode tab 211. Here, in the concave portion formation process, some sections of the first metal layer 113 and the second metal layer 214 in the electrode tab 211 may form a narrow section R2 in which the mutual spacing is narrowed. Meanwhile, after the concave portion formation process, an additional lamination process of further laminating an additional metal layer 216 may be further included.

The method for manufacturing an electrode current collector according to Embodiment 2 of the present disclosure relates to a method for manufacturing an electrode current collector 210 according to Embodiment 2 of the present disclosure and an electrode current collector included in an electrode assembly according to an embodiment of the present disclosure, which are described above.

Therefore, the embodiment of the method for manufacturing an electrode current collector according to Embodiment 2 of the present disclosure is to be described by omitting or briefly describing the content overlapping with the embodiments of the present disclosure described above and focusing on differences.

More specifically, referring to FIG. 9, in the lamination process, the stack S is formed by laminating the first metal layer 113 and the second metal layer 214 on both surfaces of the polymer layer 112.

Additionally, in the lamination process, the first metal layer 113 and the second metal layer 214 may be laminated on both surfaces of the polymer layer 112 through deposition or lamination. In this case, for example, in the lamination process, the first metal layer 113 and the second metal layer 214 may be formed by depositing them on both surfaces of the polymer layer 112.

Referring to FIG. 10, in the tab formation process, an electrode tab 211 is formed by notching an end portion of the stack S.

That is, in the tab formation process, the electrode tab 211 may be formed in a protruding shape by cutting one side of the stack S in which the first metal layer 113 and the second metal layer 214 are laminated on both surfaces of the polymer layer 112.

Additionally, the tab formation process may include notching so that the electrode tab 211 is formed in the stack S using a punch die or laser.

Referring to FIGS. 10 and 13, in the concave portion formation process, a concave portion 215 recessed toward the polymer layer 112 is formed in at least one of the first metal layer 113 or the second metal layer 214 in the electrode tab 211. Accordingly, in the concave portion formation process, some sections of the first metal layer 113 and the second metal layer 114 in the electrode tab 211 may form a narrow section R2 in which the mutual spacing is narrowed. In this case, the mutual spacing t5 between the first metal layer 113 and the second metal layer 114 in the narrow section R2 may be, for example, 72% or less with respect to the thickness of the polymer layer 112. And, for example, the mutual spacing t0 between the first metal layer 113 and the second metal layer 214 in the narrow section R2 may be 2 to 10 um. In this case, specifically, for example, the mutual spacing t0 between the first metal layer 113 and the second metal layer 214 in the narrow section R2 may be 2 to 8 um.

And, the concave portion formation process may include a pressing step of pressing a portion of the first metal layer 113 toward the polymer layer 112 with a pressing means P to form a concave portion 215.

In the pressing step, the concave portion 215 may be formed so that the concave portion 215 and the second metal layer 214 are positioned to be spaced apart from each other by a regular interval.

In the additional lamination process, an additional metal layer 216 may be further laminated on the outer surface of the first metal layer 113 after the concave portion formation process.

Additionally, in the additional lamination process, the additional metal layer 216 may be laminated so as to be positioned on the electrode tab 211.

And, in the additional lamination process, the thickness t4 of the additional metal layer 216 may be formed to be 0.2 to 2 um.

Additionally, in the additional lamination process, the additional metal layer 216 may further include a protrusion 216a that protrudes corresponding to the concave portion 215. In this case, for example, the height of the protrusion 216a in the stacking direction may be formed to be 1 to 4 um.

Meanwhile, as an example, in the additional lamination process, the additional metal layer 216 may be formed by lamination of it with the first metal layer 113 by applying heat and pressure.

And, as another example, in the additional lamination process, the additional metal layer 216 may be formed by depositing it on the outer surface of the first metal layer 113.

The present disclosure has been hereinabove described in detail through specific embodiments, but this is intended to specifically describe the present disclosure, and the present disclosure is not limited thereto. It will be said that various modifications and variations are possible by those having ordinary skill in the art within the technical ideas of the present disclosure.

Additionally, the specific scope of protection of the present disclosure will be made clear by the appended claims of the patent.

### Electrode current collector according to Embodiment 3

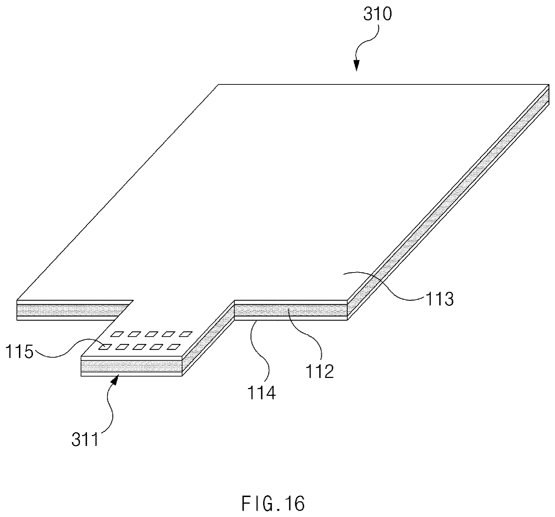

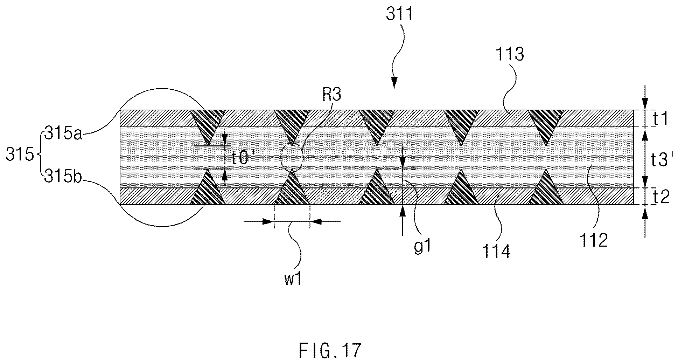

FIG. 16 is a perspective view showing an electrode current collector according to Embodiment 3 of the present disclosure, and FIG. 17 is a cross-sectional view showing an electrode tab in an electrode current collector according to Embodiment 3 of the present disclosure.

Referring to FIGS. 16 and 17, the electrode current collector 310 according to Embodiment 3 of the present disclosure is an electrode current collector 310 including an electrode tab 311 extending at an end, and includes a polymer layer 112 and a first metal layer 113 and a second metal layer 114 laminated on both surfaces of the polymer layer 112.

Additionally, some sections of the first metal layer 113 and the second metal layer 114 in the electrode tab 311 form a narrow section R3 in which the mutual spacing is narrowed, and the mutual spacing t0' between the first metal layer 113 and the second metal layer 114 in the narrow section R3 may be 72% or less with respect to the thickness t3' of the polymer layer 112.

In addition, at least one of the first metal layer 113 or the second metal layer 114 in the electrode tab 311 includes a metal wedge 315 inserted into the polymer layer 112.

The electrode current collector 310 according to Embodiment 3 of the present disclosure differs from the electrode current collectors according to Embodiments 1 and 2 of the present disclosure described above in that the metal wedge 315 is positioned in at least one of the layers of the first metal layer 113 or the second metal layer 114. Therefore, this embodiment is to be described by omitting or briefly describing the content overlapping with the above-described embodiments and focusing on differences.

More specifically, the electrode current collector 310 includes an electrode tab 311 extending at an end. That is, the electrode tab 311 may be formed by notching the end of the electrode current collector 310.

Additionally, the electrode current collector 310 includes a polymer layer 112 and a first metal layer 113 and a second metal layer 114 laminated on both surfaces of the polymer layer 112 in the stacking direction. Here, the polymer layer 112 is a layer including a polymer material, and the first metal layer 113 and the second metal layer 114 are layers including a metal material. Therefore, the electrode current collector 310 is provided in a form where the first metal layer 113 and the second metal layer 114 are laminated on both surfaces of the polymer layer 112, which may prevent the occurrence of a fire due to excessive current density occurring when formed of only a metal material. In addition, the electrode current collector 310 may form the first metal layer 113 and the second metal layer 114 thinly on both surfaces thereof, so that the risk of a shorting due to a metal burr or the like may be low in the event of breaking.

In addition, for example, the thickness t3' of the polymer layer 112 may be 2 to 14 um, and the thicknesses t1, t2 of the first metal layer 113 and the second metal layer 114 may be 0.2 to 3 um.

The metal wedge 315 is positioned by being inserted into to the polymer layer 112 in at least one of the first metal layer 113 or the second metal layer 114 in the electrode tab 311. In this case, the height g1 of the metal wedge 315 inserted into the first metal layer 113 or the second metal layer 114 may be greater than the thicknesses t1, t2 of the first metal layer 113 and the second metal layer 114.

Additionally, the metal wedge 315 may include a metal material. In addition, the metal wedge 315 may include, for example, the same material as the material of the first metal layer 113 and the second metal layer 114.

And, the metal wedge 315 may include a plurality of first metal wedges 315a located in the first metal layer 113 and a plurality of second metal wedges 315b located in the second metal layer 114.

Here, the first metal wedge 315a and the second metal wedge 315b may be spaced apart from each other by a regular interval.

In addition, the mutual spacing t0' between the first metal wedge 315a and the second metal wedge 315b may be 2 to 10 um. That is, the mutual spacing t0' between the first metal layer 113 and the second metal layer 114 in the narrow section R3 may be 2 to 10 um.

Therefore, the mutual spacing t0' between the first metal wedge 315a and the second metal wedge 315b may be formed to be the lower limit value of 2 um or more, so that the effect of preventing a fire from occurring due to excessive current density of the electrode current collector 310 in which the first metal layer 113 and the second metal layer 114 are laminated on both surfaces of the polymer layer 112 may be implemented. That is, the mutual spacing t0' between the first metal wedge 315a and the second metal wedge 315b may be formed to be the lower limit value of 2 um or more, thereby significantly improving thermal stability.

On the other hand, the mutual spacing t0' between the first metal wedge 315a and the second metal wedge 315b may be formed to be the upper limit value of 10 um or less, thereby significantly facilitating welding and significantly increasing conductivity.

Meanwhile, some sections of the first metal layer 113 and the second metal layer 114 in the electrode tab 311 form a narrow section R3 in which the mutual spacing is narrowed.

The mutual spacing t0' between the first metal layer 113 and the second metal layer 114 in the narrow section R3 may be, for example, 72% or less with respect to the thickness t3' of the polymer layer 112. Accordingly, the mutual spacing t0' between the first metal layer 113 and the second metal layer 114 in the narrow section R3 may be formed to be, for example, 72% or less with respect to the thickness t3' of the polymer layer 112, thereby improving weldability. Here, the mutual spacing t0' between the first metal layer 113 and the second metal layer 114 in the narrow section R3 may be specifically, for example, 50% or less with respect to the thickness t3' of the polymer layer 112. In this case, the mutual spacing t0' between the first metal layer 113 and the second metal layer 114 in the narrow section R1 may be more specifically, for example, 10 to 50% with respect to the thickness t3' of the polymer layer 112.

Additionally, as a first example of the electrode tab 311, the first metal wedge 315a and the second metal wedge 315b may be positioned parallel to each other in the stacking direction. Here, in an example of the electrode tab 311, the thicknesses t1, t2 of the first metal layer 113 and the second metal layer 114 may be the same. In this case, for example, the thicknesses t3' of the first metal layer 113 and the second metal layer 114 may be 0.5 to 1 um.

On the other hand, as a second example of the electrode tab 311, the first metal wedge 315a and the second metal wedge 315b in the metal wedge 315 may be positioned alternately in the stacking direction.

On the other hand, as a third example of the electrode tab 311, the thickness t1 of the first metal layer 113 and the thickness t2 of the second metal layer 114 may be formed to be different from each other. In this case, the metal wedge 315 may be provided in the second metal layer 114.

Referring to FIGS. 16 and 17, in the electrode current collector 310 according to Embodiment 3 of the present disclosure configured as described above, the metal wedges 315 may be inserted into the polymer layer 112 in the metal layer located at the part forming the electrode tab 311 in the metalized electrode current collector 310 in which metal layers are laminated on both surfaces of the polymer layer 112, thereby having the effect of significantly improving weldability. That is, when the electrode tabs 311 respectively provided on the multiple electrode current collectors 310 are mutually welded to form an electrode assembly and when the electrode tabs 311 and the electrode leads are welded, the metal wedges 315 are inserted into the polymer layer 112 at the welded portion, so that the thickness t3' of the polymer layer 112 is formed thinly, and the interval between the metal portions located on both surfaces of the polymer layer 112 is narrowed, thereby having the effect of significantly improving welding. Ultimately, when welding using a laser or ultrasonic wave, it is possible to prevent weldability from deteriorating because the laser or ultrasonic wave may not pass through the polymer layer 112.

### Electrode current collector according to Embodiment 4

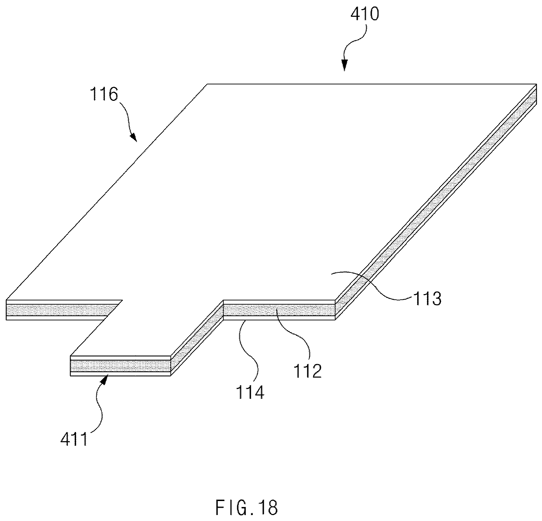

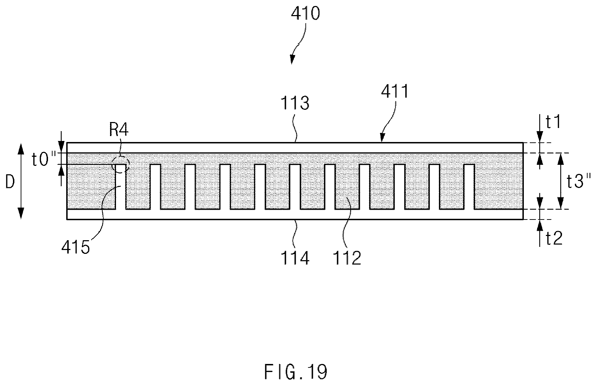

FIG. 18 is a perspective view showing an electrode current collector according to Embodiment 4 of the present disclosure, and FIG. 19 is a cross-sectional view showing an electrode current collector according to Embodiment 4 of the present disclosure.

Referring to FIGS. 18 and 19, the electrode current collector 410 according to Embodiment 4 of the present disclosure is an electrode current collector 410 including an electrode tab 411 extending at an end, and includes a polymer layer 112 and a first metal layer 113 and a second metal layer 114 laminated on both surfaces of the polymer layer 112.

Additionally, some sections of the first metal layer 113 and the second metal layer 114 in the electrode tab 411 form a narrow section R4 in which the mutual spacing is narrowed, and the mutual spacing t0" between the first metal layer 113 and the second metal layer 114 in the narrow section R4 may be 72% or less with respect to the thickness t3" of the polymer layer 112.

In addition, in the electrode tab 411, the second metal layer 114 includes metal ribs 415 extending to the polymer layer 112.

The electrode current collector 410 according to Embodiment 4 of the present disclosure differs from the electrode current collectors according to Embodiments 1 to 3 of the present disclosure described above in that the metal ribs 415 extending to the polymer layer are provided in the second metal layer 114. Therefore, this embodiment is to be described by omitting or briefly describing the content overlapping with the above-described embodiments and focusing on differences.

More specifically, the electrode current collector 410 includes an electrode tab 411 extending at an end. That is, the electrode tab 411 may be formed by notching the end of the electrode current collector 410.

Additionally, the electrode current collector 410 includes a polymer layer 112 and a first metal layer 113 and a second metal layer 114 laminated on both surfaces of the polymer layer 112 in the stacking direction D. Here, the polymer layer 112 is a layer including a polymer material, and the first metal layer 113 and the second metal layer 114 are layers including a metal material.

In addition, for example, the thickness t3" of the polymer layer 112 may be 2 to 14 um.

And, for example, the thicknesses t1, t2 of the first metal layer 113 and the second metal layer 114 may be 0.2 to 3 um. Here, specifically, for example, the thicknesses t1, t2 of the first metal layer 113 and the second metal layer 114 may be 0.2 to 2 um.

Meanwhile, the thickness t1 of the first metal layer 113 may be, as an example, the same as the thickness t2 of the second metal layer 114.

Additionally, the thickness t1 of the first metal layer 113 may be, as another example, thicker than the thickness t2 of the second metal layer 114. Accordingly, the electrode current collector 410 may be easy to manufacture.

The metal ribs 415 may be provided to extend from the second metal layer 114 to the polymer layer 112 in the electrode tab.

Additionally, the metal ribs 415 may protrude from the inner surface of the second metal layer 114 to the polymer layer 112 and may be formed along the inner surface of the second metal layer 114.

In addition, the metal ribs 415 may include the same material as the material of the first metal layer 113 and the second metal layer 114.

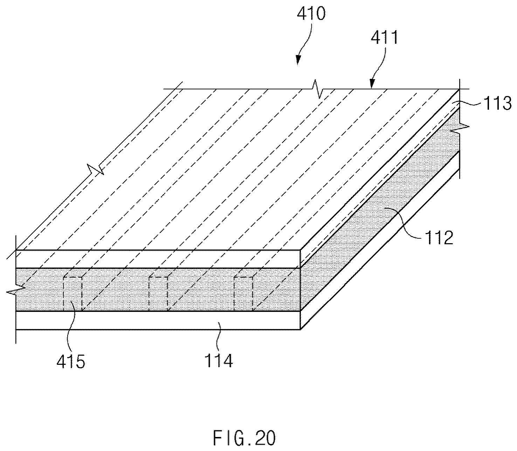

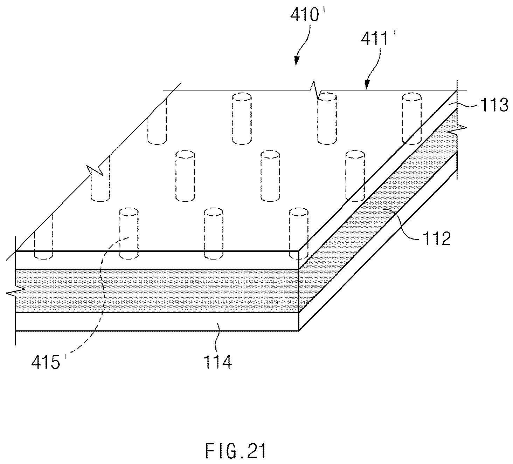

FIG. 20 is a perspective view of an essential portion showing an example of an electrode current collector according to Embodiment 4 of the present disclosure, and FIG. 21 is a perspective view of an essential portion showing another example of an electrode current collector according to Embodiment 4 of the present disclosure.

Referring to FIG. 20, in the electrode tab 411 of the electrode collector 410, the metal ribs 415 may be formed in the form of rectangular walls, as an example, and may be provided in multiples at regular intervals.

Referring to FIG. 21, in the electrode tab 411' of the electrode collector 410', the metal ribs 415' may be provided in the form of multiple cylinders, as another example.

Meanwhile, referring to FIG. 19, the ends of the metal ribs 415 may be spaced apart from the first metal layer 113 by a regular interval.

Accordingly, the ends of the metal ribs 415 are spaced apart from the first metal layer 113 by a regular interval, so that the first metal layer 113 and the second metal layer 114 may not be connected, thereby maintaining the safety effect of the metalized electrode current collector 410 in which the metal layers are laminated on both surfaces of the polymer layer 112.

Additionally, the spacing between the ends of the metal ribs 415 and the first metal layer 113 may be 2 to 8 um. That is, the mutual spacing t0" between the first metal layer 113 and the second metal layer 114 in the narrow section R4 may be 2 to 10 um. Therefore, the mutual spacing t0" between the ends of the metal ribs 415 and the first metal layer 113 is formed to be the lower limit value of 2 um or more, so that thermal safety may be significantly improved. Meanwhile, the mutual spacing t0" between the ends of the metal ribs 415 and the first metal layer 113 is formed to be the upper limit value of 8 um or less, so that welding may be significantly facilitated.

Referring to FIGS. 18 and 19, the electrode current collector 410 according to Embodiment 4 of the present disclosure configured as described above is provided with metal ribs 415 extending toward the polymer layer 112 in the metal layer located at the part forming the electrode tab 411 in the electrode current collector 410 in which metal layers are laminated on both surfaces of the polymer layer 112, thereby having the effect of significantly improving weldability. That is, when the electrode tabs 411 respectively provided on the multiple electrode current collectors 410 are mutually welded to form an electrode assembly and when the electrode tabs 411 and the electrode leads are welded, the metal ribs 415 extend toward the polymer layer 112 at the welded portion, so that the thickness t3" of the polymer layer 112 located at the welded portion is formed thinly, and the interval between the first and second metal layers 113, 114 is narrowed, thereby having the effect of significantly improving welding. Ultimately, when welding using a laser or ultrasonic wave, it is possible to prevent weldability from deteriorating because the laser or ultrasonic wave may not pass through the polymer layer 112.

### [List of Reference Numerals]

10: Secondary battery
20: Pouch
30: Electrode lead
100: Electrode assembly
110, 310, 410: Electrode current collector
110a: Positive electrode current collector
110b: Negative electrode current collector
111, 211, 311, 411: Electrode tab
112: Polymer layer
113: First metal layer
114, 214: Second metal layer
115, 215: Concave portion
115a: First concave portion
115b: Second concave portion
120: Electrode active material
120a: Positive electrode active material
120b: Negative electrode active material
130: Electrode
130a: Positive electrode
130b: Negative electrode
140: Separator
216: Additional metal layer
216a: Protrusion
315: Metal wedge
315a: First metal wedge
315b: Second metal wedge
415, 415': Metal rib
P: Pressing means
R: Welded portion
S: Stack

## Claims

1. An electrode current collector comprising an electrode tab extending at an end, the electrode current collector comprising:
a polymer layer and a first metal layer and a second metal layer laminated on both surfaces of the polymer layer,
wherein in the electrode tab, a concave portion recessed toward the polymer layer is formed in at least one of the first metal layer or the second metal layer.

2. The electrode current collector according to claim 1,
wherein the concave portion comprises a first concave portion formed in the first metal layer; and a second concave portion formed in the second metal layer.

3. The electrode current collector according to claim 2,
wherein the first concave portion and the second concave portion are formed to face each other in the stacking direction.

4. The electrode current collector according to claim 3,
wherein the first concave portion and the second concave portion are provided at positions spaced apart from each other by a regular interval.

5. The electrode current collector according to claim 4,
wherein the mutually facing spacing between the first metal layer portion where the first concave portion is formed and the second metal layer portion where the second concave portion is formed is 2 to 8 um.

6. The electrode current collector according to claim 2,
wherein the first concave portion and the second concave portion are formed in multiples in the first metal layer and the second metal layer, respectively.

7. The electrode current collector according to claim 1,
wherein the depth in the stacking direction of the concave portion is formed to be 1 to 4 um.

8. The electrode current collector according to any one of claims 1 to 7,
wherein the thickness of the polymer layer is 4 to 14 um, and
the thicknesses of the first metal layer and the second metal layer are formed to be 0.2 to 2 um.

9. The electrode current collector according to claim 1,
wherein the concave portion is formed in the first metal layer, and
the electrode current collector further comprises an additional metal layer laminated on the outer surface of the first metal layer.

10. The electrode current collector according to claim 9,
wherein the thicknesses of the first metal layer and the second metal layer are formed to be 0.2 to 2 um, and
the thickness of the additional metal layer is formed to be 0.2 to 2 um.

11. The electrode current collector according to claim 9,
wherein the concave portion and the second metal layer are provided at positions spaced apart from each other by a regular interval.

12. The electrode current collector according to claim 11,
wherein the mutually facing spacing between the portion where the concave portion is formed in the first metal layer and the second metal layer is 2 to 10 um.

13. The electrode current collector according to claim 9,
wherein the additional metal layer is located on the electrode tab.

14. The electrode current collector according to claim 9,
wherein the additional metal layer further comprises a protrusion that protrudes corresponding to the concave portion.

15. The electrode current collector according to claim 14,
wherein the height of the protrusion in the stacking direction is formed to be 1 to 4 um.

16. An electrode current collector comprising an electrode tab extending at an end, the electrode current collector comprising:
a polymer layer and a first metal layer and a second metal layer laminated on both surfaces of the polymer layer,
wherein some sections of the first metal layer and the second metal layer in the electrode tab form a narrow section in which the mutual spacing is narrowed, and
the mutual spacing between the first metal layer and the second metal layer in the narrow section is 72% or less with respect to the thickness of the polymer layer other than the narrow section.

17. The electrode current collector according to claim 16,
wherein the mutual spacing between the first metal layer and the second metal layer in the narrow section is 2 to 10 um.

18. The electrode current collector according to claim 16,
wherein in the narrow section, a concave portion recessed toward the polymer layer is formed in at least one of the first metal layer or the second metal layer so that the mutual spacing between the first metal layer and the second metal layer is narrowed.

19. The electrode current collector according to claim 16,
wherein in the narrow section, at least one of the first metal layer or the second metal layer comprises metal wedges inserted into the polymer layer so that the mutual spacing between the first metal layer and the second metal layer is narrowed.

20. The electrode current collector according to claim 16,
wherein in the narrow section, the second metal layer comprises metal ribs extending to the polymer layer so that the mutual spacing between the first metal layer and the second metal layer is narrowed.

21. An electrode assembly in which electrodes and separators are alternately stacked,
wherein the electrode comprises an electrode current collector comprising an electrode tab extending at an end, and
the electrode current collector comprises a polymer layer and a first metal layer and a second metal layer laminated on both surfaces of the polymer layer in the stacking direction,
wherein in the electrode tab, a concave portion recessed toward the polymer layer is formed in at least one of the first metal layer or the second metal layer.

22. The electrode assembly according to claim 21,
wherein the multiple electrodes and separators are stacked in the electrode assembly,
wherein the electrode tabs of the electrode current collectors provided on each of the multiple electrodes are collected and welded together, and
the concave portion is positioned at the welded portion of the electrode tabs.

23. The electrode assembly according to claim 21,
wherein the concave portion is formed in the first metal layer, and
the electrode current collector further comprises an additional metal layer laminated on the outer surface of the first metal layer,
wherein the additional metal layer is located on the electrode tab.

24. The electrode assembly according to claim 21,
wherein the concave portion comprises:
a first concave portion formed in the first metal layer; and a second concave portion formed in the second metal layer,
wherein the first concave portion and the second concave portion are formed to face each other in the stacking direction.

25. A method for manufacturing the electrode current collector, comprising:
a lamination process for laminating a first metal layer and a second metal layer on both surfaces of a polymer layer to form a stack;
a tab formation process for forming an electrode tab by notching an end portion of the stack; and
a concave portion formation process for forming a concave portion recessed toward the polymer layer in at least one of the first metal layer and the second metal layer in the electrode tab.

26. The method for manufacturing the electrode current collector according to claim 25,
wherein the concave portion formation process comprises:
a first pressing step of pressing a portion of the first metal layer with a pressing means to form a first concave portion; and
a second pressing step of pressing a portion of the second metal layer with a pressing means to form a second concave portion.

27. The method for manufacturing the electrode current collector according to claim 26,
wherein the concave portion formation process performs the first pressing step and the second pressing step together, and the first concave portion and the second concave portion are formed to face each other at positions spaced apart from each other by a regular interval.

28. The method for manufacturing the electrode current collector according to claim 27,
wherein the concave portion formation process comprises a pressing step of pressing a portion of the first metal layer toward the polymer layer with a pressing means to form the concave portion, and
the method for manufacturing the electrode current collector further comprises an additional lamination process of further laminating an additional metal layer on the outer surface of the first metal layer, after the concave portion formation process.

29. The method for manufacturing the electrode current collector according to claim 28,
wherein in the pressing step, the concave portion is formed so that the concave portion and the second metal layer are positioned to be spaced apart from each other by a regular interval.

30. The method for manufacturing the electrode current collector according to claim 28,
wherein in the lamination process, the first metal layer and the second metal layer are formed by depositing them on both surfaces of the polymer layer, and
in the additional lamination process, the additional metal layer is formed by lamination of it with the first metal layer by applying heat and pressure.

31. The method for manufacturing the electrode current collector according to claim 28,
wherein in the lamination process, the first metal layer and the second metal layer are formed by depositing them on both surfaces of the polymer layer, and
in the additional lamination process, the additional metal layer is formed by depositing it on the outer surface of the first metal layer.

32. The method for manufacturing the electrode current collector according to claim 28,
wherein in the additional lamination process, the additional metal layer is laminated so as to be positioned on the electrode tab.
